# FASCICULE DE BREVET EUROPEEN

(11) **EP 2 527 304 B1**
(45) Date de publication et mention de la délivrance du brevet: **22.08.2018**
(21) Numéro de dépôt: 12168703.2
(22) Date de dépôt: 21.05.2012
(51) Int. Cl.: C03B 11/10, C03B 23/207

(54) **Procédé et installation de fabrication d'un flacon en verre**
Verfahren und Anlage zur Herstellung eines Glasflakons
Method and facility for producing a glass vial

(30) Priorité: 23.05.2011 FR 1154464
(43) Date de publication de la demande: 28.11.2012
(73) Titulaire: Pochet du Courval, 75010 Paris (FR)
(72) Inventeur: BRUNEAU, Antoine, 76260 EU (FR); GUEROUT, Sébastien, 76340 MONCHAUX SORENG (FR); PRUVOST, Jean-Marie, 80430 BEAUCAMPS LE VIEUX (FR); BALITEAU, Sébastien, 80220 BOUTTENCOURT (FR)
(74) Mandataire: Derambure Conseil

(56) Documents cités:
- EP-A1- 0 577 445
- GB-A- 564 304
- US-A- 419 441
- US-A- 2 772 515

## Description

La présente invention concerne un procédé et une installation de fabrication d'un flacon en verre comprenant notamment un fond et des parois latérales et éventuellement une bague à l'opposé dudit fond.

Généralement les flacons en verre sont obtenus en introduisant au moins une goutte de verre, également appelée paraison, dans une empreinte d'un moule ébaucheur et à préformer une ébauche par exemple par soufflage d'air dans ce moule ébaucheur.

Ensuite, l'ébauche ainsi réalisée est démoulée et transférée par exemple par un bras manipulateur, dans un moule finisseur où de l'air est soufflé de façon à former définitivement le flacon.

Cette méthode a pour principal inconvénient de ne pas permettre d'imprimer sur la face interne d'au moins une paroi du flacon un ou plusieurs motifs en creux ou en relief. En effet, certains utilisateurs de flacons en verre notamment dans le domaine de la parfumerie ou de la cosmétique, cherchent à personnaliser leur flacon en réalisant des décors en relief et/ou en creux à l'intérieur, rappelant ou suggérant la marque et/ou le produit contenu dans les flacons. Le ou les décors à l'intérieur peuvent être indépendants de la forme du flacon et ces motifs peuvent être par exemple des effets optiques particuliers. Le brevet No. US 419,441 divulgue un autre procédé de fabrication d'un flacon en verre utilisant deux demi-coquilles d'un moule ébaucheur et consistant à appliquer un poinçon pour répartir le verre dans les empreintes formées par les demi-coquilles. L'invention a pour but de proposer un procédé et une installation de fabrication de flacons en verre permettant de réaliser ce type d'intervention à l'intérieur de ces flacons.

L'invention a donc pour objet un procédé de fabrication d'un flacon en verre comportant un corps comprenant, notamment un fond et des parois latérales, caractérisé en ce qu'il consiste en les étapes suivantes :
a) on dépose dans une empreinte d'une première demi-coquille d'un moule ébaucheur au moins une goutte de verre et on dépose dans une empreinte d'une seconde demi-coquille du moule ébaucheur au moins une goutte de verre, chaque empreinte ayant une forme correspondant sensiblement à la forme extérieure d'un demi-corps dudit corps,
b) on forme le demi-corps dans l'empreinte de chaque demi-coquille en appliquant un poinçon pour répartir le verre dans l'empreinte correspondante et définir les parois de chaque demi-corps, et
c) on applique les bords des deux demi-corps les uns contre les autres en exerçant une pression déterminée pour souder à chaud les bords des deux demi-corps les uns avec les autres et obtenir le flacon.

Le procédé selon l'invention peut comprendre une ou plusieurs des caractéristiques suivantes, prises isolément ou suivant toutes les combinaisons techniquement possibles :
- on forme dans l'empreinte d'une demi-coquille, un demi-corps muni d'une bague,
- on forme dans l'empreinte de chaque demi-coquille, un demi-corps muni d'une demi-bague pour obtenir après soudage à chaud des bords des demi-corps et des demi-bagues un flacon comportant un corps muni d'une bague,
- on forme au moyen d'au moins un desdits poinçons sur une face interne d'au moins une paroi d'au moins un demi-corps, au moins un motif en relief ou en creux,
- on forme au moyen desdits poinçons sur une face interne d'au moins une paroi de chaque demi-corps au moins un motif en relief ou en creux,
- on réalise l'étape c) directement dans le moule ébaucheur en appliquant les deux demi-coquilles l'une contre l'autre,
- après l'étape b), on transfère les deux demi-corps dans un moule finisseur et on réalise l'étape c),
- après l'étape b), on extrait les deux demi-corps des deux coquilles du moule ébaucheur et on réalise l'étape c),
- après l'étape c), on transfère le corps dans un moule finisseur et on réalise au moins une étape de finition, et
- avant l'étape c), on effectue un réchauffage des bords des deux demi-corps et on effectue ladite étape c).

L'invention a également pour objet une installation de fabrication d'un flacon en verre pour la mise en oeuvre du procédé tel que précédemment mentionné, caractérisée en ce qu'elle comprend :
- un moule ébaucheur formé de deux demi-coquilles comportant chacune une empreinte de forme correspondant sensiblement à la forme extérieure d'un demi-corps dudit corps,
- des moyens de dépose dans l'empreinte de chaque demi-coquille d'au moins une goutte de verre,
- au moins un poinçon déplaçable entre une position passive et une position active appliquée dans l'empreinte de chaque demi-coquille pour répartir le verre dans l'empreinte et définir les parois intérieures de chaque demi-corps, et,
- des moyens d'application des bords des deux demi-corps les uns sur les autres en exerçant une pression déterminée pour souder à chaud ces bords des deux demi-corps les uns avec les autres et obtenir le flacon.

L'installation selon l'invention peut comprendre une ou plusieurs des caractéristiques suivantes, prises isolément ou suivant toutes les combinaisons techniquement possibles :
- au moins un des deux poinçons comporte au moins un motif en relief ou en creux pour former sur une face interne d'au moins une paroi d'au moins un demi-corps, ledit au moins motif en relief ou en creux,
- les moyens d'application des bords des deux demi-corps sont formés par les deux demi-coquilles du moule ébaucheur,
- l'installation comporte des moyens de transfert de chaque demi-corps dans une demi-coquille d'un moule finisseur et les moyens d'application des bords des parois des deux demi-corps sont formés par les deux demi-coquilles du moule finisseur, et
- l'installation comprend au moins un élément de réchauffage des bords des deux demi-corps avant d'appliquer ces bords des deux demi-corps les uns contre les autres.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un flacon en verre obtenu au moyen d'une installation de fabrication, conforme à l'invention,
- la Fig. 2 est une vue schématique en perspective d'un moule ébaucheur de la l'installation de fabrication, conforme à l'invention,
- la Fig. 3 est une vue schématique en perspective des poinçons de l'installation de la fabrication, conforme à l'invention, et
- les Figs. 4 à 8 sont des vues schématiques en perspective montrant les différentes étapes de fabrication du flacon en verre au moyen de l'installation, conforme à l'invention.

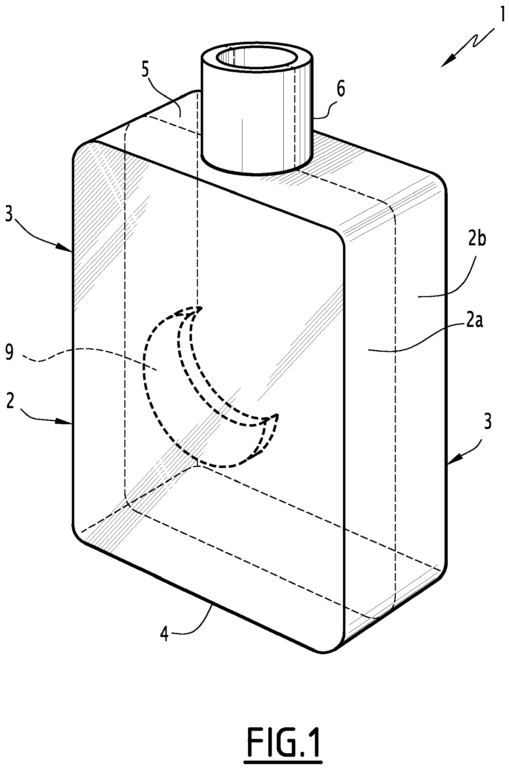

Sur la Fig. 1, on a représenté schématiquement un flacon en verre désigné par la référence générale 1 et qui présente, dans cet exemple, une forme générale parallélépipédique, et comportant un corps 2 avec des parois latérales 3, un fond 4, et une partie supérieure 5 opposée au fond 4 et munie d'une bague 6.

Le flacon 1 peut présenter toute autre forme générale, comme par exemple cylindrique ou ovoïde.

Selon une variante, la partie supérieure 5 du corps 2 peut être pourvue d'un simple orifice sans bague 6, et dans ce cas, une pompe, non représentée, peut être montée directement sur cet orifice.

Dans ce qui suit, la description sera faite pour un flacon 1 muni d'une bague 6.

Le flacon 1 est obtenu par pressage à chaud de deux demi-corps 2a et 2b symétriques, comme on le verra ultérieurement.

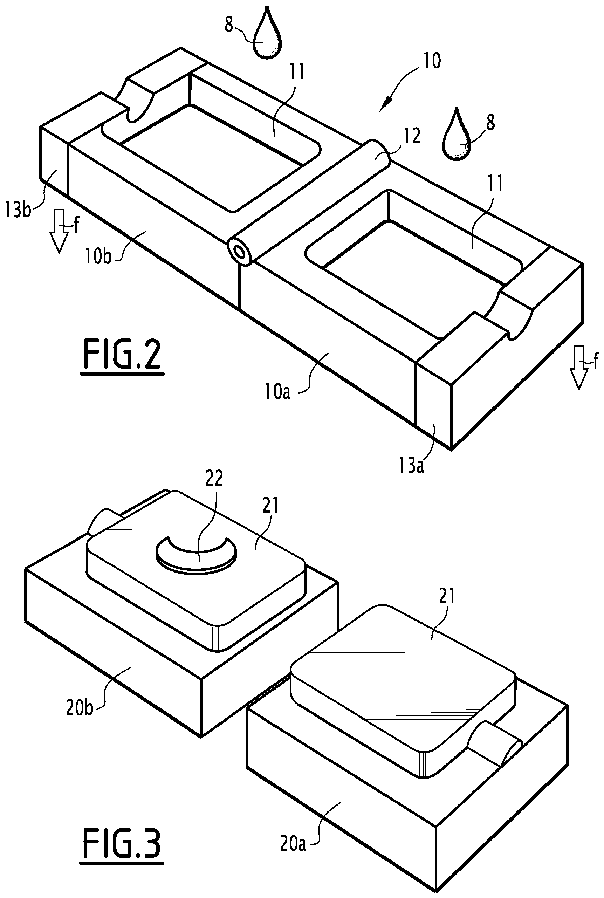

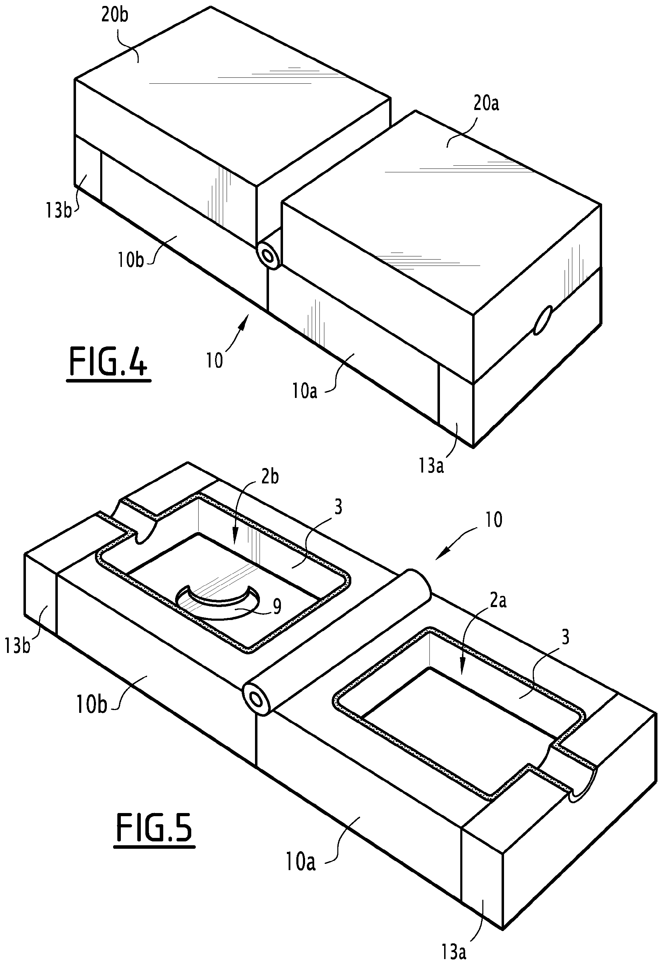

En se reportant maintenant aux Figs. 2 à 8, on va décrire l'installation permettant la fabrication d'un flacon 1 telle que précédemment décrit.

Ainsi que montré à la Fig. 2, l'installation comprend, entre autres, un moule ébaucheur 10 formé de deux demi-coquilles 10a et 10b comportant chacune une empreinte 11 de forme correspondant sensiblement à la forme extérieure d'un demi-corps 2a ou 2b du corps 2 du flacon 1.

Bien évidemment, les formes extérieure et intérieure du corps 2 peuvent être différentes.

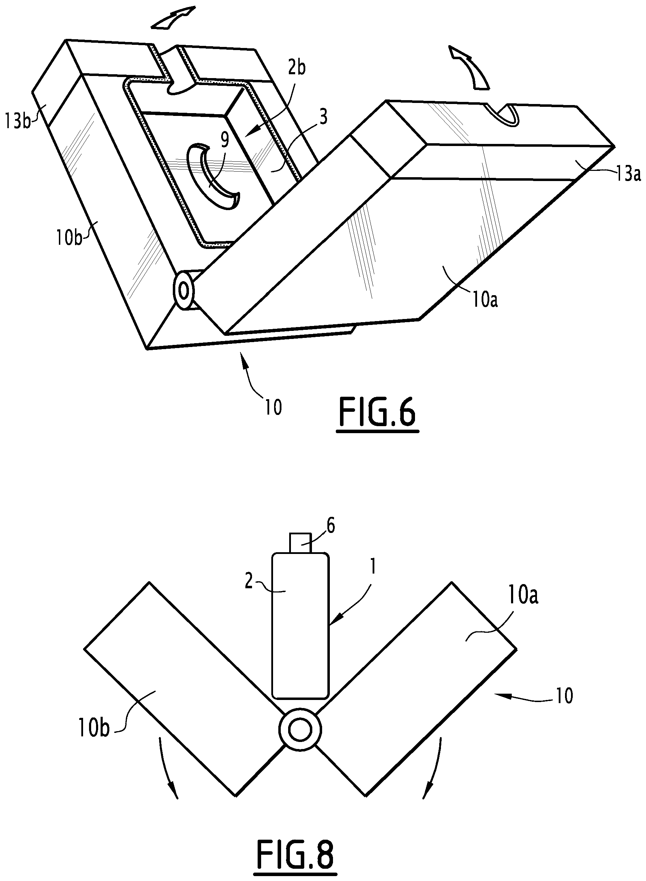

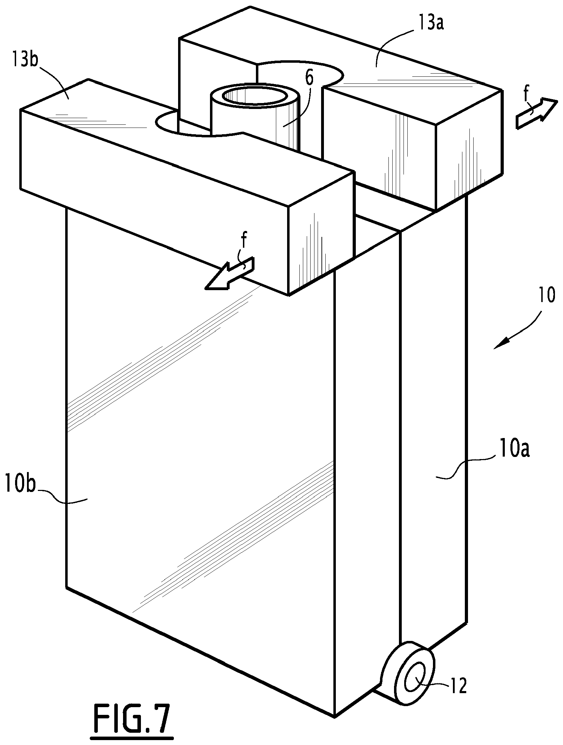

Les deux demi-coquilles 10a et 10b sont déplaçables entre une position écartée l'une de l'autre, comme montré à la Fig. 2 et une position appliquée l'une contre l'autre comme montré sur les Figs. 6 et 7.

A titre d'exemple, les deux demi-coquilles 10a et 10b sont montées pivotantes sur un axe 12 permettant de les déplacer entre ces deux positions. D'autres moyens de type connu peuvent être utilisés pour déplacer ces deux demi-coquilles 10a et 10b entre les deux positions.

Par ailleurs, chaque demi-coquille 10a et 10b comporte un tiroir, respectivement 13a et 13b déplaçable transversalement selon la flèche f afin de démouler la bague 6 avant le corps 2 du flacon 1. Pour cela, chaque tiroir 13a et 13b est monté coulissant sur la demi-coquille 10a et 10b correspondante au moyen par exemple de glissières ou de tout autres systèmes appropriés de type connu.

Ainsi que montré à la Fig. 3, l'installation comprend aussi deux poinçons 20a et 20b comportant chacun une forme 21 en relief correspondant sensiblement à l'empreinte 11. Au moins une forme 21 peut comporter au moins un motif 22 en relief ou en creux de façon à imprimer ce motif 22 en relief ou en creux sur une face interne d'au moins une paroi d'un ou des deux demi-corps 2a et 2b.

Selon une variante, l'installation comporte au moins un poinçon déplaçable entre une position passive et une position active appliquée dans l'empreinte de chaque demi-coquille.

Pour réaliser le flacon 1 formé de deux demi-corps 2a et 2b collés à chaud, on procède de la façon suivante.

Tout d'abord et comme montré à la Fig. 2, on dépose dans l'empreinte 11 de chaque demi-coquille 10a et 10b du moule ébaucheur 10, une goutte de verre 8.

Ensuite, on forme simultanément les deux demi-corps 2a et 2b dans les empreintes 11 des deux demi-coquilles 10a et 10b en appliquant les poinçons 20a et 20b sur les demi-coquilles 10a et 10b du moule ébaucheur 10.

Les formes 21 en relief s'appliquent dans les empreintes 11 permettant ainsi de répartir le verre dans l'empreinte 11 correspondante et ainsi de définir les parois 3 de chaque demi-corps 2a et 2b et de chaque demi-bague de la bague 6.

Après avoir retiré chaque poinçon 20a et 20b de la demi-coquille 11a et 11b correspondante du moule ébaucheur 10, ainsi que montré à la Fig. 6, chaque empreinte 11 contient un demi-corps 2a et 2b destiné à être assemblé l'un avec l'autre pour former le flacon 1.

Les deux demi-coquilles 10a et 10b du moule ébaucheur 10 sont rapprochées l'une de l'autre et appliquées l'une contre l'autre par exemple par basculement autour de l'axe 12 ou par tout autre mouvement approprié.

Ces deux demi-coquilles 10a et 10b sont appliquées l'une contre l'autre pendant une durée déterminée de façon à exercer une pression suffisante et déterminée sur les bords des deux demi-corps 2a et 2b afin d'obtenir un soudage à chaud de ces bords entre eux.

Les bords des deux demi-corps 2a et 2b doivent être à une température déterminée, comme par exemple de l'ordre de 600°C selon la composition du verre.

Dans le cas où la température du verre des bords des deux demi-corps 2a et 2b est insuffisante pour réaliser le soudage à chaud de ces bords entre eux, un réchauffage peut être effectué par des moyens appropriés de façon à ramener la température de ces bords à un niveau déterminé permettant le soudage de ceux-ci entre eux. Ces moyens sont constitués par exemple par une rampe de chalumeau montée sur un vérin permettant de rapprocher ce chalumeau de la surface à réchauffer ou par une résistance chauffante.

La température à atteindre doit permettre une refusion locale du verre.

Un soufflage d'air peut également être réalisé dans l'ébauche du flacon après application des bords des deux demi-corps les uns contre les autres.

Après avoir maintenu les deux demi-coquilles 10a et 10b appliquées l'une contre l'autre pendant une durée déterminée propre à chaque modèle, les tiroirs 13a et 13b de ces deux demi-coquilles 10a et 10b sont écartés vers l'extérieur, comme montré à la Fig. 7 de façon à démouler, dans un premier temps, la bague 6 du flacon 1. La bague 6 permet la préhension du flacon 1 par exemple par un bras manipulateur, non représenté, afin d'assurer son transfert.

Dans un second temps, les deux demi-coquilles 10a et 10b du moule ébaucheur 10 sont séparées l'une de l'autre, par exemple par basculement autour de l'axe 12 permettant ainsi le démoulage du corps 2 du flacon 1, comme représenté à la Fig. 8.

Le flacon 1 ainsi obtenu peut être transféré par exemple par un bras manipulateur, non représenté, et de type connu, vers un moule finisseur dans lequel au moins une opération de finition est effectuée, comme par exemple le brûlage de la zone de jonction entre les deux demi-corps 2a et 2b du corps 2 et des deux demi-bagues de la bague 6. D'autres opérations de finition peuvent être également réalisées.

Le flacon 1 comporte éventuellement au moins un motif 9 en relief ou en creux sur au moins une face interne de ces parois permettant de ce fait de personnaliser le flacon en fonction, par exemple de la marque utilisatrice ou du produit contenu dans ce flacon.

Selon une première variante, les deux demi-corps 2a et 2b formés par le moule ébaucheur 10 peuvent être transférés au moyen d'au moins un bras manipulateur, non représenté, dans un moule finisseur, non représenté, dans lequel le soudage à chaud des bords de ces deux demi-corps l'un avec l'autre est réalisé. Pour cela, le moule finisseur est également formé de deux demi-coquilles comportant chacun une empreinte correspondant chacune sensiblement à un demi-corps.

Dans ce cas également, un réchauffage des bords des deux demi-corps 2a et 2b peut également être effectué avant l'application selon une pression déterminée des demi-corps l'un contre l'autre.

Selon une seconde variante, les deux demi-corps 2a et 2b obtenus après formage dans le moule ébaucheur 10 peuvent être transférés par exemple par au moins un bras manipulateur, non représenté, dans un dispositif approprié permettant l'application sous une pression déterminée des bords des deux demi-corps 2a et 2b les uns contre les autres de façon à réaliser leur soudage à chaud. Dans ce cas également, un réchauffage des bords des parois des deux demi-corps 2a et 2b peut également être effectué.

Selon un autre mode de réalisation, une feuille de composition proche du verre constituant les deux demi-corps peut être placée entre les bords de ces deux demi-corps avant leur application l'un contre l'autre.

Le procédé et l'installation de fabrication selon l'invention offre de nouvelles possibilités en terme de flaconnage en proposant l'obtention par des moyens simples à mettre en oeuvre des flacons comportant des motifs en relief ou en creux sur les faces internes de ce flacon.

## Revendications

1. Procédé de fabrication d'un flacon en verre (1) comportant un corps (2) comprenant notamment un fond (4) et des parois latérales (3), **caractérisé en ce qu'**il consiste en les étapes suivantes :
a) on dépose dans une empreinte (11) d'une première demi-coquille (10a) d'un moule ébaucheur (10) une goutte de verre (8) et on dépose dans une empreinte (11) d'une seconde demi-coquille (10b) du moule ébaucheur (10) une goutte de verre (8), chaque empreinte (11) ayant une forme correspondant sensiblement à la forme extérieure d'un demi-corps (2a, 2b) dudit corps (2),
b) on forme le demi-corps (2a, 2b) dans une empreinte (11) de chaque demi-coquille (10a, 10b) en appliquant un poinçon (20a, 20b) pour répartir le verre dans l'empreinte (11) correspondante et définir les parois de chaque demi-corps (2a, 2b), et on forme au moyen d'au moins un desdits poinçons (20a, 20b) sur une face interne d'au moins une paroi d'au moins un demi-corps (2a, 2b) au moins un motif en relief ou en creux, et
c) on applique les bords des deux demi-corps (2a, 2b) les uns sur les autres en exerçant une pression déterminée pour souder à chaud ces bords des deux demi-corps (2a, 2b) les uns avec les autres et obtenir le flacon (1).

2. Procédé selon la revendication 1, **caractérisé en ce que** l'on forme dans l'empreinte (11) d'une demi-coquille (10a, 10b), un demi-corps (2a, 2b) muni d'une bague (6).

3. Procédé selon la revendication 1, **caractérisé en ce que** l'on forme dans l'empreinte (11) de chaque demi-coquille (10a, 10b) un demi-corps (2a, 2b) muni d'une demi-bague pour obtenir après soudage à chaud des bords des demi-corps (2a, 2b) et des demi-bagues, un flacon comportant un corps (2) muni d'une bague (6).

4. Procédé selon l'une quelconque des revendications 1 à 3, **caractérisé en ce qu'**on forme au moyen des poinçons (20a, 20b) sur une face interne d'au moins une paroi de chaque demi-corps (2a, 2b), au moins un motif en relief ou en creux.

5. Procédé selon l'une quelconque des revendications 1 à 4, **caractérisé en ce qu'**on réalise l'étape c) directement dans le moule ébaucheur (10) en appliquant les deux demi-coquilles (2a, 2b) l'une contre l'autre.

6. Procédé selon l'une quelconque des revendications 1 à 4, **caractérisé en ce qu'**après l'étape b), on transfère les deux demi-corps (2a, 2b) dans un moule finisseur et on réaliser l'étape c).

7. Procédé selon l'une quelconque des revendications 1 à 4, **caractérisé en ce qu'**après l'étape b), on extrait les deux demi-corps (2a, 2b) des demi-coquilles (10a, 10b) du moule ébaucheur et on réalise l'étape c).

8. Procédé selon l'une quelconque des revendications précédentes, **caractérisé en ce qu'**après l'étape c), on transfère le corps (2) dans un moule finisseur et on réalise au moins une étape de finition.

9. Procédé selon l'une quelconque des revendications précédentes, **caractérisé en ce qu'**avant l'étape c), on effectue un réchauffage des bords des deux demi-corps (2a, 2b) et on effectue ladite étape c).

10. Procédé selon l'une quelconque des revendications précédentes, **caractérisé en ce qu'**on réalise un soufflage d'air à l'intérieur du corps (2) au cours de l'étape c).

11. Installation de fabrication d'un flacon en verre (1) pour la mise en oeuvre du procédé selon l'une quelconque des revendications précédentes, **caractérisée en ce qu'**elle comprend :
- un moule ébaucheur (10) formé de deux demi-coquilles (10a, 10b) comportant chacune une empreinte (11) de forme correspondant sensiblement à la forme extérieure d'un demi-corps (2a, 2b) dudit corps (2),
- des moyens de dépose dans l'empreinte (11) de chaque demi-coquille (10a, 10b) d'une goutte de verre (8),
- au moins un poinçon (20a, 20b) déplaçable entre une position passive et une position active appliquée dans l'empreinte (11) de chaque demi-coquille (10a, 10b) pour répartir le verre dans l'empreinte (11) et définir les parois intérieure et extérieure de chaque demi-corps (2a, 2b), le ou chaque poinçon (20a, 20b) comportant au moins un motif (22) en relief ou en creux pour former sur une face interne d'au moins une paroi d'au moins un demi-corps (2a et 2b) ledit au moins un motif (9) en relief ou en creux, et
- des moyens d'application des bords des deux demi-coquilles (2a, 2b) les uns sur les autres en exerçant une pression déterminée pour souder à chaud ces bords des deux demi-corps (2a, 2b) les uns avec les autres et obtenir le flacon (1).

12. Installation selon la revendication 11, **caractérisée en ce que** les moyens d'application des bords des deux demi-corps (2a, 2b) sont formés par les deux demi-coquilles (10a, 10b) du moule ébaucheur (10).

13. Installation selon la revendication 11, **caractérisée en ce qu'**elle comporte des moyens de transfert de chaque demi-corps (2a et 2b) dans une demi-coquille d'un moule finisseur et les moyens d'application des bords des deux demi-corps (2a, 2b) sont formés par les deux demi-coquilles du moule finisseur.

14. Installation selon l'une quelconque des revendications 11 à 13, **caractérisée en ce qu'**elle comprend au moins un élément de réchauffage des bords des deux demi-corps (2a, 2b) avant d'appliquer ces bords desdits demi-corps (2a, 2b) les uns contres les autres.

## Patentansprüche

1. Verfahren zur Herstellung eines Glasflakons (1), der einen Körper (2) mit insbesondere einem Boden (4) und Seitenwänden (3) aufweist, **dadurch gekennzeichnet, dass** es aus den folgenden Schritten besteht:
a) Anordnen eines Glastropfens (8) in einer Aufnahme (11) einer ersten Halbkokille (10a) eines Vorformwerkzeugs (10) und Anordnen eines Glastropfens (8) in einer Aufnahme (11) einer zweiten Halbkokille (10b) des Vorformwerkzeugs (10), wobei jede Aufnahme (11) eine Form hat, die im Wesentlichen der Außenform eines Halbkörpers (2a, 2b) des Körpers (2) entspricht,
b) Formen des Halbkörpers (2a, 2b) in einer Aufnahme (11) jeder Halbkokille (10a, 10b) durch Aufdrücken eines Stempels (20a, 20b), um das Glas in der entsprechenden Aufnahme (11) zu verteilen und die Wände jedes Halbkörpers (2a, 2b) zu definieren, und Formen mindestens eines erhabenen oder eingesenkten Musters an einer Innenfläche mindestens einer Wand mindestens eines Halbkörpers (2a, 2b) mit Hilfe mindestens eines der Stempel (20a, 20b), und
c) Aneinanderpressen der Ränder der zwei Halbkörper (2a, 2b) durch Ausüben eines bestimmten Drucks, um diese Ränder der zwei Halbkörper (2a, 2b) warm miteinander zu verschweißen und den Flakon (1) zu erzielen.

2. Verfahren nach Anspruch 1, **dadurch gekennzeichnet, dass** in der Aufnahme (11) einer Halbkokille (10a, 10b) ein Halbkörper (2a, 2b), der mit einem Ring (6) versehen ist, geformt wird.

3. Verfahren nach Anspruch 1, **dadurch gekennzeichnet, dass** in der Aufnahme (11) jeder Halbkokille (10a, 10b) ein Halbkörper (2a, 2b), der mit einem Halbring versehen ist, geformt wird, um nach Warmverschweißen der Ränder der Halbkörper (2a, 2b) und der Halbringe einen Flakon zu erhalten, der einen mit einem Ring (6) versehenen Körper (2) hat.

4. Verfahren nach einem der Ansprüche 1 bis 3, **dadurch gekennzeichnet, dass** mit Hilfe der Stempel (20a, 20b) mindestens ein erhabenes oder eingesenktes Muster an einer Innenfläche mindestens einer Wand jedes Halbkörpers (2a, 2b) geformt wird.

5. Verfahren nach einem der Ansprüche 1 bis 4, **dadurch gekennzeichnet, dass** der Schritt c) durch Aneinanderpressen der zwei Halbkokillen (2a, 2b) direkt in dem Vorformwerkzeug (10) durchgeführt wird.

6. Verfahren nach einem der Ansprüche 1 bis 4, **dadurch gekennzeichnet, dass** nach dem Schritt b) die zwei Halbkörper (2a, 2b) in ein Fertigformwerkzeug übertragen werden und der Schritt c) durchgeführt wird.

7. Verfahren nach einem der Ansprüche 1 bis 4, **dadurch gekennzeichnet, dass** nach dem Schritt b) die zwei Halbkörper (2a, 2b) aus den Halbkokillen (10a, 10b) des Vorformwerkzeugs genommen werden und der Schritt c) durchgeführt wird.

8. Verfahren nach einem der vorstehenden Ansprüche, **dadurch gekennzeichnet, dass** nach dem Schritt c) der Körper (2) in ein Fertigformwerkzeug übertragen wird und mindestens ein Endfertigungsschritt durchgeführt wird.

9. Verfahren nach einem der vorstehenden Ansprüche, **dadurch gekennzeichnet, dass** vor dem Schritt c) ein Erwärmen der Ränder der zwei Halbkörper (2a, 2b) durchgeführt wird und der Schritt c) durchgeführt wird.

10. Verfahren nach einem der vorstehenden Ansprüche, **dadurch gekennzeichnet, dass** im Verlaufe des Schritts c) ein Einblasen von Luft ins Innere des Körpers (2) durchgeführt wird.

11. Anlage zur Herstellung eines Glasflakons (1) zum Durchführen des Verfahrens nach einem der vorstehenden Ansprüche, **dadurch gekennzeichnet, dass** sie aufweist:
- ein Vorformwerkzeug (10), bestehend aus zwei Halbkokillen (10a, 10b) mit jeweils einer Aufnahme (11), deren Form im Wesentlichen der Außenform eines Halbkörpers (2a, 2b) des Körpers (2) entspricht,
- Einrichtungen zum Anordnen eines Glastropfens (8) in der Aufnahme (11) jeder Halbkokille (10a, 10b),
- mindestens einen Stempel (20a, 20b), der zwischen einer passiven Position und einer in der Aufnahme (11) jeder Halbkokille (10a, 10b) aufgedrückten aktiven Position bewegbar ist, um das Glas in der Aufnahme (11) zu verteilen und die Innen- und Außenwände jedes Halbkörpers (2a, 2b) zu definieren, wobei der oder jeder Stempel (20a, 20b) mindestens ein erhabenes oder eingesenktes Muster (22) aufweist, um an einer Innenfläche mindestens einer Wand mindestens eines Halbkörpers (2a und 2b) das mindestens eine erhabene oder eingesenkte Muster (9) zu formen, und
- Einrichtungen zum Aneinanderpressen der Ränder der zwei Halbkokillen (2a, 2b) durch Ausüben eines bestimmten Drucks, um diese Ränder der zwei Halbkörper (2a, 2b) warm zu verschweißen und den Flakon (1) zu erzielen.

12. Anlage nach Anspruch 11, **dadurch gekennzeichnet, dass** die Einrichtungen zum Aneinanderpressen der Ränder der zwei Halbkörper (2a, 2b) von den zwei Halbkokillen (10a, 10b) des Vorformwerkzeugs (10) gebildet werden.

13. Anlage nach Anspruch 11, **dadurch gekennzeichnet, dass** sie Einrichtungen zum Übertragen jedes Halbkörpers (2a und 2b) in eine Halbkokille eines Fertigformwerkzeugs aufweist und die Einrichtungen zum Aneinanderpressen der Ränder der zwei Halbkörper (2a, 2b) von den zwei Halbkokillen des Fertigformwerkzeugs gebildet werden.

14. Anlage nach einem der Ansprüche 11 bis 13, **dadurch gekennzeichnet, dass** sie mindestens ein Heizelement aufweist, um die Ränder der zwei Halbkörper (2a, 2b) zu erwärmen, bevor diese Ränder der Halbkörper (2a, 2b) aneinander gepresst werden.

## Claims

1. A method of manufacturing a glass vial (1) comprising a body (2) comprising a base (4) and side walls (3), **characterized in that** it consists of the following steps:
a) a drop of glass (8) is deposited in a mould cavity (11) of a first half-shell (10a) of a blank mould (10) and a drop of glass (8) is deposited in a mould cavity (11) of a second half-shell (10b) of the blank mould (10), each mould cavity (11) having a shape substantially corresponding to the outer shape of a half-body (2a, 2b) of said body (2),
b) the half-body (2a, 2b) is formed in a mould cavity (11) of each half-shell (10a, 10b) by applying a punch (20a, 20b) for distributing the glass in the corresponding mould cavity (11) and define the walls of each half-body (2a, 2b), and is formed by means of at least one of said punches (20a, 20b) on an inner face of at least one wall of at least one half-body (2a, 2b) at least one pattern in relief or recessed pattern, and
c) the edges of the two half-bodies (2a, 2b) are applied onto each other by exerting a given pressure to heat seal the edges of the two half-bodies (2a, 2b) with each other and obtain the vial (1).

2. A method according to claim 1, **characterized in that** a half-body (2a, 2b) provided with a ring (6) is formed in the mould cavity (11) of a half-shell (10a, 10b).

3. A method according to claim 1, **characterized in that** a half-body (2a, 2b) provided with a half-ring is formed in the mould cavity (11) of each half-shell (10a, 10b), to obtain, after heat sealing the edges of the half-bodies (2a, 2b) and the half-rings, a vial comprising a body (2) provided with a ring (6).

4. A method according to any one of claims 1 to 3, **characterized in that** at least one pattern in relief or recessed pattern is formed by means of the punches (20a, 20b) on an inner face of at least one wall of each half-body (2a, 2b).

5. A method according to any one of claims 1 to 4, **characterized in that** step c) is carried out directly in the blank mould (10) by applying the two half-shells (2a, 2b) against each other.

6. A method according to any one of claims 1 to 4, **characterized in that** after step b), the two half-bodies (2a, 2b) are transferred into a blow mould and step c) is carried out.

7. A method according to any one of claims 1 to 4, **characterized in that** after step b) the two half-bodies (2a, 2b) are extracted from the half-shells (10a, 10b) of the blank mould and step c) is carried out.

8. A method according to any one of the preceding claims, **characterized in that** after step c), the body (2) is transferred in a blow mould and at least one finishing step is carried out.

9. A method according to any one of the preceding claims, **characterized in that** before step c), the edges of the two half-bodies (2a, 2b) are heated and said step c) is carried out.

10. A method according to any one of the preceding claims, **characterized in that** air is blown inside the body (2) during step c).

11. A facility for manufacturing a glass vial (1) for carrying out the method according to any one of the preceding claims, **characterized in that** it comprises:
- a blank mould (10) formed of two half-shells (10a, 10b) each having a mould cavity (11) of a shape corresponding substantially to the outer shape of a half-body (2a, 2b) of said body (2),
- means for depositing a drop of glass (8) in the mould cavity (11) of each half-shell (10a, 10b),
- at least one punch (20a, 20b) movable between a passive position and an active position applied in the mould cavity (11) of each half-shell (10a, 10b) for distributing the glass into the mould cavity (11) and define the inner and outer walls of each half-body (2a, 2b), the or each plunger (20a, 20b) having at least one pattern (22) in relief or recessed pattern to form on an inner face of at least one wall at least one half-body (2a and 2b) at least one pattern (9) in relief or recessed pattern, and
- means for applying the edges of the two half-shells (2a, 2b) onto each other by exerting a given pressure to heat seal the edges of the two half-bodies (2a, 2b) to each other to obtain the vial (1).

12. A facility according to claim 11, **characterized in that** the means for applying the edges of the two half-bodies (2a, 2b) are formed by the two half-shells (10a, 10b) of the blank mould (10).

13. A facility according to claim 11, **characterized in that** it comprises means for transferring each half-body (2a and 2b) in a half-shell of a blow mould and **in that** the means for applying the edges of the two half-bodies (2a, 2b) are formed by the two half-shells of the blow mould.

14. A facility according to any one of claims 11 to 13, **characterized in that** it comprises at least one organ for heating the edges of the two half-bodies (2a, 2b) before applying the edges of said half-bodies (2a, 2b) against each other.
